# EUROPÄISCHE PATENTSCHRIFT

(11) **EP 2 487 395 B1**
(45) Veröffentlichungstag und Bekanntmachung des Hinweises auf die Patenterteilung: **16.10.2013**
(21) Anmeldenummer: 12154136.1
(22) Anmeldetag: 07.02.2012
(51) Int. Cl.: F16K 15/10, F16K 15/14

(54) **Rücklaufventil**
Return valve
Clapet anti-retour

(30) Priorität: 12.02.2011 DE 102011011106
(43) Veröffentlichungstag der Anmeldung: 15.08.2012
(73) Patentinhaber: POLYTEC PLASTICS Germany GmbH & Co. KG, 49393 Lohne (DE)
(72) Erfinder: Janßen, Hans, 49413 Dinklage (DE); Soares, Jorge, 48493 Wettringen (DE); Esders, Helen, 49393 Lohne (DE)
(74) Vertreter: von Kreisler Selting Werner

(56) Entgegenhaltungen:
- DE-C1- 19 929 607
- DE-U1-202004 009 831
- DE-U1-202006 016 730
- US-A- 4 415 003
- US-A- 4 958 661
- US-B1- 6 290 682

## Beschreibung

Die Erfindung betrifft ein Rücklaufventil, das insbesondere zum Einsatz bei Kraftfahrzeugen geeignet ist. Das Rücklaufventil ist bevorzugt für die Anordnung in einem Rücklaufkanal, der von einem Motorbauteil zu einem Ölreservoir wie der Ölwanne führt, ausgebildet.

Um im Kurbelgehäuse vorhandenes Öl bzw. vorhandenen Ölnebel abzuführen, erfolgt mit Hilfe eines Ölabscheiders eine Ölabscheidung im Kurbelgehäuse. Das abgeschiedene Öl wird in ein Ölreservoir, insbesondere in die Ölwanne, zurückgeleitet. Hierbei muss verhindert werden, dass Falschluft gezogen wird. Hierzu ist es bekannt, ein Rückschlagventil vorzusehen. Häufig wird das Rückschlagventil direkt in den Ölabscheider oder in eine Zylinderkopfhaube integriert. Dies weist den Nachteil auf, dass die Ölsäule, die zur Öffnung des Rückschlagventils erforderlich ist, eine sehr geringe Höhe aufweist, sodass es zu Problemen im Ölrücklauf kommen kann. Dies führt zu einer erhöhten Ansammlung von Öl im Ölabscheider, wodurch die Funktion des Ölabscheiders stark beeinträchtigt ist. Um ein Ziehen von Falschluft zu vermeiden, ist es ferner bekannt, den Ölrücklauf derart auszugestalten, dass er unterhalb des Ölspiegels geführt ist. Ein derartiger Rücklaufkanal wirkt zusammen mit dem Ölsumpf wir ein Siphon. Hierbei besteht die Problematik, dass, sofern beispielsweise aufgrund von Querbeschleunigung zu wenig Öl im Ölsumpf vorhanden ist, Falschluft über dem Ölablauf gezogen wird.

Aufgabe der Erfindung ist es, ein Rücklaufventil, das insbesondere für die Anordnung in einem Rücklaufkanal zwischen Kurbelwellengehäuse und Ölreservoir geeignet ist, zu schaffen, das einen einfachen Aufbau aufweist und kostengünstig herstellbar ist. Vorzugsweise soll das Rücklaufventil zur Anordnung in einem Aluminiumbauteil eines Kraftfahrzeugmotors, wie einem Kurbelwellengehäuse, einem Nockenwellengehäuse, einem Zylinderkopf oder einem Ölwannenoberteil, geeignet sein.

Ventile dieser Art sind aus den Dokumenten DE 19929607, US 6290682, US 4958661, DE 202004009831 und DE 202006016730 bekannt.

Die Lösung der Aufgabe erfolgt erfindungsgemäß durch die Merkmale des Anspruchs 1.

Das erfindungsgemäße Rücklaufventil weist ein Gehäuse aus Kunststoff auf. Insbesondere handelt es sich hierbei um ein Kunststoff-Spritzgussteil, das beispielsweise aus PA oder faserverstärkte Kunststoff, insbesondere faserverstärktem PA hergestellt ist. In dem Kunststoffgehäuse ist ein plattenförmiges Ventilelement angeordnet. Bei dem Ventilelement handelt es sich vorzugsweise um ein aus einem dünnen Blech ausgestanztes Ventilelement. Mit Hilfe eines Halteelementes, das in bevorzugter Ausführungsform ebenfalls aus Kunststoff hergestellt ist, erfolgt ein Fixieren des Ventilelementes in dem Kunststoffgehäuse. Vorzugsweise ist das Halteelement derart ausgebildet, dass es flächig an dem Ventilelement, insbesondere einem Randbereich des Ventilelements, anliegt. Hierdurch kann bei einem insbesondere plattenförmig ausgebildeten Ventilelement eine genaue umlaufende Randlage realisiert werden. Das Halteelement ist hierbei ebenfalls vorzugsweise als Kunststoff-Spritzgussteil und vorzugsweise aus den vorstehend aufgeführten Materialien hergestellt. Der Aufbau des erfindungsgemäßen Rücklaufventils ist somit sehr einfach. Insofern kann das Rücklaufventil kostengünstig hergestellt werden und erfordert nur geringen Montageaufwand.

Erfindungsgemäß ist das Halteelement durch Verrasten mit dem Kunststoffgehäuse zu verbinden. Hierzu weisen das Haltelement und das Gehäuse vorzugsweise mehrere Rastelemente-Paare auf. Beispielsweise kann das Haltelement Rasthaken aufweisen, die in an der Innenseite des Kunststoffgehäuses vorgesehene Öffnungen einrasten. Vorzugsweise sind am Umfang eines insbesondere im Wesentlichen ringförmig ausgebildeten Halteelementes Rasthaken regelmäßig verteilt oder eine umlaufende Rastmulde angeordnet.

In einer besonders bevorzugten Ausführungsform ist das Kunststoffgehäuse von einer Metallhülse umgeben bzw. in einer Metallhülse angeordnet. Hierdurch ist es möglich, das erfindungsgemäße Rücklaufventil zusammen mit der Metallhülse in eine Öffnung eines Motorbauteils einzupressen. Insbesondere handelt es sich hierbei um eine in einem Aluminiumbauteil des Motors vorgesehene Öffnung, insbesondere eine Öffnung in dem Kurbelwellengehäuse, dem Nockenwellengehäuse, dem Zylinderkopf oder einem Ölwannenoberteil. Ferner ist es möglich, die Metallhülse mit einem Außengewinde zu versehen, so dass das Rücklaufventil zusammen mit der Metallhülse in eine Öffnung am Motor eingeschraubt werden kann. Diese Öffnungen können wiederum an den entsprechenden Bauteilen des Motors vorgesehen sein.

Insbesondere kann das Kunststoffgehäuse vorzugsweise durch eine verrastende Hinterschneidung mit der Metallhülse formschlüssig verbunden sein. Durch das Vorsehen einer das Kunststoffgehäuse umgebenden Metallhülse ist es möglich, dass Rücklaufventil unmittelbar im Kurbelgehäuse anzuordnen. Insbesondere kann das Rücklaufventil in eine in dem Kurbelgehäuse vorgesehene Öffnung eingepresst werden. Hierzu ist vorzugsweise eine Übermaßpassung vorgesehen. Durch das Einpressen des Rücklaufventils, bzw. der Metallhülse des Rücklaufventils, in eine Öffnung im Kurbelgehäuse, ist eine einfache Montage realisiert und aufgrund des Übermaßes gleichzeitig eine feste und dichte Verbindung geschaffen. Das Vorsehen einer Metallhülse hat hier den erheblichen Vorteil, dass auch unter den auftretenden Temperaturen und Drücken der feste Sitz in dem Kurbelgehäuse gewährleistet bleibt. Andererseits hat das erfindungsgemäße Ausgestalten des Rücklaufventils mit einem Kunststoffgehäuse und einem insbesondere aus Kunststoff hergestellten Halteelement den Vorteil, dass eine kostengünstige Herstellung möglich ist. So handelt es sich bei der Hülse vorzugsweise um ein einfaches Drehteil oder ggf. sogar um eine einfache tiefgezogene Hülse. Dies ist erheblich kostengünstiger als das Ventilelement unmittelbar in der Metallhülse anzuordnen, da die Metallhülse sodann, um ein sicheres Befestigen des Ventilelementes in der Metallhülse zu gewährleisten, aufwändig mit mehreren Absätzen und Halteelementen ausgebildet sein müsste. Das Halten des Ventilelementes erfolgt erfindungsgemäß innerhalb des Kunststoffgehäuses. Dies ist erheblich kostengünstiger herstellbar, da die entsprechenden erforderlichen Ansätze, Vorsprünge und dergleichen bei einem als Kunststoff-Spritzgussteil ausgebildeten Teil kostengünstiger herstellbar sind.

Bei dem Ventilelement, das vorzugsweise als gestanztes Metallblech, insbesondere aus Federblech, ausgebildet ist, handelt es sich um ein kostengünstiges Bauteil. Hierbei ist das Ventilelement vorzugsweise eben ausgebildet und weist Ausstanzungen auf. Durch die Ausstanzungen ist ein Ventilteller ausgebildet. Die Ausstanzungen umgeben den Ventilteller jedoch nicht vollständig, sodass insbesondere zwei Stege bzw. Verbindungselemente zwischen dem Ventilteller und einem den Ventilteller umgebenden Ventilrahmen, verbleiben. Diese Stege oder Verbindungselemente bilden nach Art eines Festkörpergelenks die Gelenke aus, um die der Ventilteller zum Öffnen verschwenkt wird. Vorzugsweise sind die Ausstanzungen spiralförmig ausgebildet. Insbesondere sind zwei Ausstanzungen vorgesehen, wobei es sich bei den Ausstanzungen um spiralförmige Ausstanzungen handelt, die ineinander greifen.

Das Ventilelement wird somit in einer bevorzugten Ausführungsform erfindungsgemäß aus einem dünnen Blechteil ausgestanzt, wobei das Blech vorzugsweise eine Dicke von 0,15 ― 0,06, insbesondere 0,08 mm aufweist. Besonders bevorzugt ist es hierbei, dass das Ventilelement rund ausgebildet ist und vorzugsweise einen Durchmesser von weniger als 25 mm, insbesondere weniger als 20 mm, aufweist. Besonders bevorzugt weist das Ventilelement einen Durchmesser von 14-21 mm auf.

Zur einfachen Befestigung des Ventilelementes in dem Gehäuse weist das Gehäuse vorzugsweise eine Anlagefläche auf. Das Gehäuse weist hierzu eine vorzugsweise zylindrisch ausgebildete Öffnung auf, in die das Ventil eingesetzt wird. Zur Ausbildung der Anlagefläche erfolgt eine stufenartige Verringerung des Querschnitts der Öffnung. Bei einer zylindrischen Öffnung erfolgt somit eine Durchmesserverringerung. Hierdurch ist ein Absatz ausgebildet, der die Anlagefläche bildet, an der das Ventilelement anliegt. Die verbleibende vorzugsweise ebenfalls zylindrische Öffnung ist hierbei vorzugsweise geringfügig kleiner als die Fläche des Ventiltellers, sodass der Ventilteller an dem inneren Rand der Anlagefläche dichtend anliegt. Das Ventilelement, insbesondere ein äußerer vorzugsweise durchgehender Ring oder Rahmen des Ventilelementes, ist zwischen dem Halteelement und der Anlagefläche angeordnet und wird somit von dem Halteelement gegen die Anlagefläche gedrückt. Hierdurch erfolgt auf einfache Weise ein klemmendes Halten des Ventilelementes in dem Kunststoffgehäuse.

Das vorzugsweise insbesondere kreisringförmig ausgebildete Halteelement weist vorzugsweise eine zum Ventilteller konzentrische Öffnung auf.

In einer besonders bevorzugten Weiterbildung der Erfindung ist die Anlagefläche derart ausgebildet, dass sie eine insbesondere ringförmig ausgebildete, in Richtung des Ventilelementes offene Ausnehmung aufweist. Aufgrund dieser insbesondere ringförmig ausgebildeten Ausnehmung ist das Ausströmen des Öls bei geöffnetem Ventil verbessert, da das Öl nicht durch einen relativ breiten, schmalen Spalt fließen muss, sondern unmittelbar in die Ausnehmung gelangt.

Nachfolgend wird die Erfindung anhand bevorzugter Ausführungsformen unter Bezugnahme auf die Zeichnungen näher erläutert.

Es zeigen:
- Fig. 1:: Eine perspektivische Explosionszeichnung einer ersten Ausführungsform der Erfindung.
- Fig. 2:: Eine schematische Schnittansicht der ersten Ausführungsform der Erfindung im montierten Zustand.
- Fig. 3:: Eine Draufsicht auf das Ventilelement.
- Fig. 4:: Eine schematische geschnittene perspektivische Ansicht einer weiteren Ausführungsform der Erfindung.
- Fig. 5:: Eine schematisch vergrößerte, geschnittene Ansicht des Bereichs des Ventilelementes der in Fig. 4 dargestellten Ausführungsform.
- Figur 6:: Eine schematische Schnittansicht einer weiteren Ausführungsform des erfindungsgemäßen Rücklaufventils.

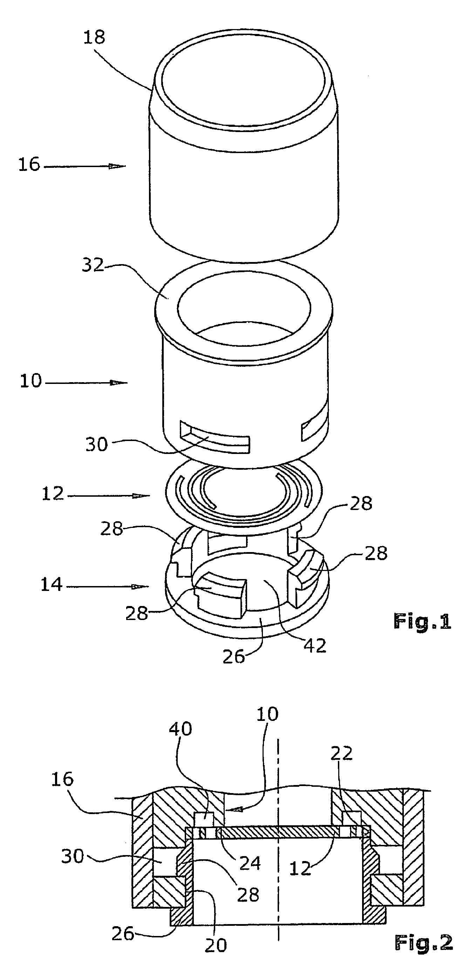

Bei einer ersten bevorzugten Ausführungsform (Fign. 1 und 2) weist das Rückschlagventil ein Kunststoffgehäuse 10 auf, in dem ein Ventilelement 12 angeordnet und mittels eines Halteelementes 14 fixiert ist. Bei dieser bevorzugten Ausführungsform ist das Gehäuse 10 von einer Metallhülse 16 umgeben. Die Metallhülse 16 kann insbesondere mit Übermaß in eine Öffnung in einem Kurbelgehäuse eingesetzt werden. Zum einfacheren Einpressen der Hülse 16 in eine Öffnung mit Übermaß weist die Hülse 16 eine Phase 18 auf.

In den ersten Montageschritten wird das Ventilelement 12 in Fig. 1 von unten in das im Wesentlichen zylindrische Gehäuse eingelegt und mit Hilfe des Haltelementes 14 fixiert.

Um ein zuverlässiges Fixieren des Ventilelementes 12 zu gewährleisten, weist das Gehäuse 10 im dargestellten Ausführungsbeispiel eine zylindrische Öffnung 20 auf, durch die das Ventilelement 12 eingeführt wird. Ferner weist das Gehäuse 10 einen Absatz bzw. eine Verringerung des Durchmessers auf einen zylindrischen Bereich 22 auf. Hierdurch ist eine Anlagefläche 24 ausgebildet. Auf dieser Anlagefläche 24 liegt das Ventilelement 12 auf.

Die Fixierung des Ventilelementes 12 erfolgt sodann über das im Wesentlichen ringförmige Halteelement 14. Mit einem kreisringförmigen Element 26 sind im dargestellten Ausführungsbeispiel vier Rasthaken 28 verbunden. Die Rasthaken 28 drücken gegen die Oberseite des Ventilelementes 12, sodass das Ventilelement 12 zwischen dem Halteelement, d. h. dem Rasthaken 28 des Halteelementes und der Anlagefläche 24, eingeklemmt ist. Die Rasthaken 28 rasten in vier in dem Gehäuse 10 vorgesehene Öffnungen 30 ein.

Die Montage des aus einem dünnen Metallblech hergestellten Ventilelementes ist somit sehr einfach, da das Ventilelement nur in die Öffnung 20 des Gehäuses 10 eingelegt und sodann in das Halteelement 14 eingedrückt werden muss bis die Rasthaken 28 in die Öffnungen 30 einrasten.

Im nächsten Schritt kann in dem dargestellten Ausführungsbeispiel das Kunststoffgehäuse 10 in die Hülse eingepresst werden. Um ein sicheres Fixieren des Gehäuses 10 in der Hülse 18 zu gewährleisten, weist das Gehäuse 10 im dargestellten Ausführungsbeispiel einen nach außen weisenden ringförmigen Ansatz 32 auf. Der Ansatz 32 verrastet mit der Hülse 18, indem dieser im montierten Zustand über die in Fig. 1 obere Seite der Hülse 16 hinausragt. Der Ansatz 32 ist hierbei dünner als die Wand der Hülse 16, sodass der Ansatz 32 nicht beim Montieren bzw. Einpressen der Hülse in eine Öffnung des Kurbelgehäuses oder dergleichen stört.

Das Ventilelement 12 ist durch Ausstanzen eines Blechteils hergestellt. Hierdurch wird ein Ventilteller 34 hergestellt, der über zwei spiralförmige Stege 36 mit einem Ventilrahmen bzw. Ventilring 38 verbunden ist. Zur Ausgestaltung der spiralförmigen Stege 36 sind in dem Ventilelement 12 zwei spiralförmige Ausstanzungen 37 vorgesehen. Die Stege 36 stellen hierbei Festkörpergelenke dar, sodass durch Verdrehen bzw. Verschwenken des Ventiltellers 34 ein Öffnen und Schließen des Ventils erfolgt. Um ein Verdrehen bzw. Verwinden der Stegteile 36 zu ermöglichen, ist in der Anlagefläche 24 eine ringförmige Ausnehmung 40 vorgesehen. Das im Wesentlichen ringförmige Halteelement 14 weist eine zu dem Ventilteller 34 konzentrische Öffnung 42 (Fig. 1) auf.

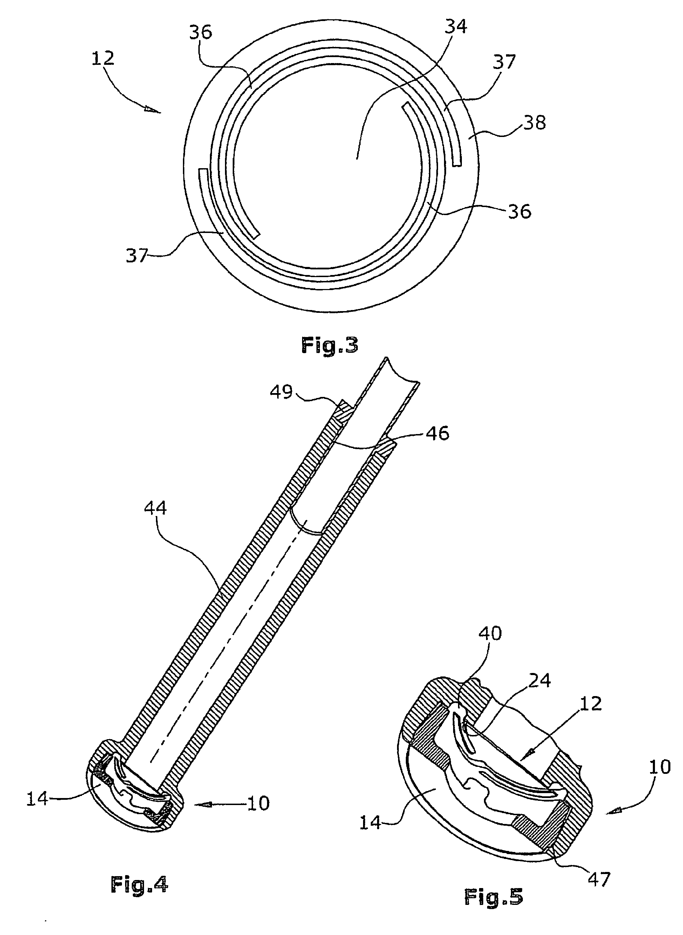

Bei einer weiteren bevorzugten Ausführungsform (Fig. 4 und 5) weist das Rücklaufventil keine Metallhülse auf, die das Gehäuse 10 unmittelbar umgibt. Vielmehr ist das Gehäuse 10 einstückig mit einem Kunststoffrohr 44 (Fig. 4) verbunden. In das Ende des Kunststoffrohrs 44 ist eine Metallhülse 46 eingespritzt, wobei über die Metallhülse 46 ggf. wiederrum mit Übermaß ein Verbinden des Rücklaufventile mit einem Kurbelgehäuse möglich ist. Alternativ weist die Hülse ein Außengewinde auf, mit dem das Rohr in eine Öffnung eines Motorbauteils eingeschraubt werden kann. Beim Vorsehen eines Außengewindes an der Hülse 46 weist diese vorzugsweise einen Anschlag 49 auf. Des Weiteren ist es möglich, anstelle des Vorsehens einer Metallhülse 46 das Kunststoffrohr unmittelbar an ein Kunststoff-Bauteil, wie eine Zylinderkopfhaube, anzuspritzen. An dem anderen Ende des Kunststoffrohrs 44 ist das Gehäuse 10 angeordnet, wobei in dem Gehäuse 10 wiederrum das Ventilelement 12 angeordnet ist. Das Ventilelement 12 ist wiederrum auf einer Anlagefläche 24 angeordnet und über ein Halteelement 14 gehalten, wobei das Halteelement 14 im dargestellten Ausführungsbeispiel über eine Ringschnappverbindung 47 in dem Gehäuse 10 fixiert ist. Die Fixierung kann ebenso über Rastelemente, wie anhand der ersten Ausführungsform beschrieben, erfolgen.

Die in Figur 4 und 5 dargestellte Ausführungsform weist insbesondere den Vorteil auf, dass der Durchmesser der Metallhülse geringer gewählt werden kann als der Durchmesser des das Ventilelement 12 tragenden Gehäuses 10.

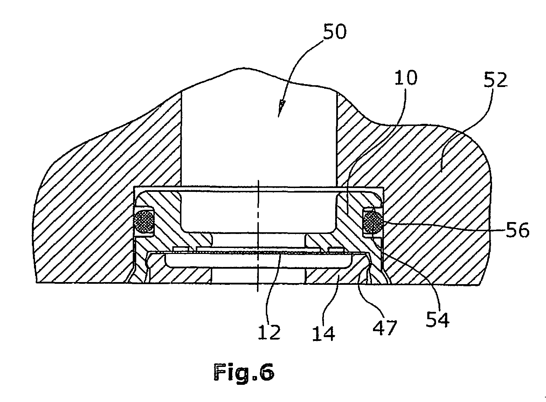

Bei einer weiteren bevorzugten Ausführungsform (Fig. 6) weist das Rückschlagventil keine das Kunststoffgehäuse 10 umgebende Metallhülse auf. Vielmehr ist das Kunststoffgehäuse 10 unmittelbar in eine Öffnung 50 eines Motorblocks 52 eingesetzt. Das Kunststoffgehäuse 10 ist hierbei zur Abdichtung von einem O-Ring 54 umgeben, der in einer Nut 56 des Gehäuses angeordnet ist.

Im Übrigen ist das Rücklaufventil in seinen wesentlichen Bauteilen entsprechend den vorstehenden Ausführungsformen ausgebildet. Insbesondere ist ebenfalls ein gestanztes Ventilelement 12 vorgesehen, das durch ein Halteelement 14 gehalten ist. Das Halteelement 14 weist eine umlaufende Rastnase 47 entsprechend der in Figuren 4 und 5 dargestellten Ausführungsform auf.

## Patentansprüche

1. Rücklaufventil für einen von einem Motorbauteil zu einem Ölreservoir führenden Rücklaufkanal, mit
einem aus Kunststoff hergestellten Gehäuse (10),
einem in dem Gehäuse (10) angeordneten plattenförmigen Ventilelement (12) und
einem das Ventilelement (12) in dem Gehäuse (10) fixierenden Halteelement (14), **dadurch gekennzeichnet, dass**
das Halteelement (14) und das Gehäuse (10) zum Fixieren des Halteelements (14) im Gehäuse (10) Rastelemente (28, 30) aufweisen.

2. Rücklaufventil nach Anspruch 1, **dadurch gekennzeichnet, dass** das Gehäuse (10) von einer Metallhülse (16, 46) umgeben ist, wobei vorzugsweise eine Gehäuseaußenseite an einer Hülseninnenseite dichtend, insbesondere vollflächig dichtend, anliegt.

3. Rücklaufventil nach Anspruch 2, **dadurch gekennzeichnet, dass** die Metallhülse (16, 46) in eine Öffnung eines Motorbauteils, insbesondere eines Aluminium-Motorbauteils eingepresst ist.

4. Rücklaufventil nach Anspruch 2, **dadurch gekennzeichnet, dass** die Metallhülse (16, 46) in eine Öffnung eines Motorbauteils, insbesondere eines Aluminium-Motorbauteils eingeschraubt ist.

5. Rücklaufventil nach einem der Anspruch 1 bis 4, **dadurch gekennzeichnet, dass** das Ventilelement (12) als gestanztes Metallblech, insbesondere Federblech, ausgebildet ist.

6. Rücklaufventil nach einem der Ansprüche 1 bis 5, **dadurch gekennzeichnet, dass** das Ventilelement (12) einen Ventilteller (34) aufweist, der durch Ausstanzungen (37) im Ventilelement hergestellt ist.

7. Rücklaufventil nach Anspruch 6, **dadurch gekennzeichnet, dass** mehrere spiralförmige, ineinander greifende Ausstanzungen (37) vorgesehen sind.

8. Rücklaufventil nach einem der Ansprüche 1 bis 7, **dadurch gekennzeichnet, dass** das Gehäuse (10) eine Anlagefläche (24) zur Anlage des Ventilelementes (12) aufweist, die vorzugsweise den Ventilteller (34) vollständig umgibt.

9. Rücklaufventil nach Anspruch 8, **dadurch gekennzeichnet, dass** das Halteelement (14) das Ventilelement (12) gegen die Anlagefläche (24) drückt.

10. Rücklaufventil nach einem der Ansprüche 1 bis 9, **dadurch gekennzeichnet, dass** das Halteelement (14) ringförmig, insbesondere kreisringförmig ausgebildet ist und vorzugsweise eine zum Ventilteller (34) konzentrisch angeordnete Öffnung (42) aufweist.

## Claims

1. A non-return valve for a return flow channel extending from an engine component to an oil reservoir, comprising
a housing (10) manufactured from plastic,
a plate-shaped valve element (12) disposed in the housing (10), and
a retaining element (14) fixing the valve member (12) in the housing (10), **characterized in that**
the retaining element (14) and the housing (10) are provided with latching elements (28,30) for fixing the retaining element (14) in the housing (10).

2. The non-return valve according to claim 1, **characterized in that** the housing (10) is surrounded by a metal sleeve (16,46), wherein, preferably, a housing outer side rests on a sleeve inner side in a sealing manner, particular with full-surface sealing.

3. The non-return valve according to claim 2, **characterized in that** the metal sleeve (16,46) is pressed into an opening of an engine component, in particular an aluminum engine component.

4. The non-return valve according to claim 2, **characterized in that** the metal sleeve (16,46) is screwed into an opening of an engine component, in particular an aluminum engine component.

5. The non-return valve according to any one of claims 1 to 4, **characterized in that** the valve element (12) is formed as a punched metal sheet, in particular a spring steel sheet.

6. The non-return valve according to any one of claims 1 to 5, **characterized in that** the valve element (12) comprises a valve disk (34) manufactured from punchings (37) in the valve element.

7. The non-return valve according to claim 6, **characterized in that** a plurality of spiral-shaped, interlocking punchings (37) are provided.

8. The non-return valve according to any one of claims 1 to 7, **characterized in that** the housing (10) comprises a bearing surface (24) for abutment by the valve element (12), said bearing surface preferably completely surrounding the valve disk (34).

9. The non-return valve according to claim 8, **characterized in that** the retaining element (14) presses the valve element (12) against the bearing surface (24).

10. The non-return valve according to any one of claims 1 to 9, **characterized in that** the retaining element (14) has an annular shape, particularly the shape of a circular ring, and preferably has an opening (42) concentrically disposed relative to the valve disk (34).

## Revendications

1. Clapet anti-retour destiné à un canal de retour allant d'un élément de moteur à un réservoir d'huile, ledit clapet comportant :
un boitier (10) fabriqué en matière synthétique,
un élément de clapet (12) en forme de plaque disposé dans le boîtier (10) et
un élément de retenue (14) immobilisant l'élément de clapet (12) dans le boîtier (10), **caractérisée en ce que**,
pour fixer l'élément de retenue (14) dans le boîtier (10), l'élément de retenue (14) et le boîtier (10) comportent des éléments d'encliquetage (28, 30).

2. Clapet anti-retour selon la revendication 1, **caractérisé en ce que** le boîtier (10) est entouré par une enveloppe métallique (16, 46), avantageusement un côté extérieur du boîtier portant de façon étanche contre un côté intérieur de l'enveloppe, notamment de façon étanche sur toute la surface.

3. Clapet anti-retour selon la revendication 2, **caractérisé en ce que** l'enveloppe métallique (16, 46) est enfoncée dans une ouverture d'un élément de moteur, en particulier d'un élément de moteur en aluminium.

4. Clapet anti-retour selon la revendication 2, **caractérisé en ce que** l'enveloppe métallique (16, 46) est vissée dans une ouverture d'un élément de moteur, en particulier d'un élément de moteur en aluminium.

5. Clapet anti-retour selon l'une des revendications 1 à 4, **caractérisé en ce que** l'élément de clapet (12) est conformé en tôle métallique estampée, en particulier en tôle à ressort.

6. Clapet anti-retour selon l'une des revendications 1 à 5, **caractérisé en ce que** l'élément de clapet (12) comporte une tête de clapet (34) qui est réalisée en ménageant des évidements (37) dans l'élément de clapet.

7. Clapet anti-retour selon la revendication 6, **caractérisé en ce qu'**il est prévu plusieurs évidements (37) en forme de spirale s'engageant l'un dans l'autre.

8. Clapet anti-retour selon l'une des revendications 1 à 7, **caractérisé en ce que** le boîtier (10) comporte une surface d'appui (24) pour l'appui de l'élément de clapet (12) qui, de préférence, entoure totalement la tête de clapet (34).

9. Clapet anti-retour selon la revendication 8, **caractérisé en ce que** l'élément de retenue (14) presse l'élément de clapet (12) contre la surface d'appui (24).

10. Clapet anti-retour selon l'une des revendications 1 à 9, **caractérisé en ce que** l'élément de retenue (14) est conformé en anneau, en particulier en anneau circulaire et comporte de préférence une ouverture (42) disposée concentriquement à la tête de clapet (34).
